# EUROPEAN PATENT SPECIFICATION

(11) **EP 2 914 553 B1**
(45) Date of publication and mention of the grant of the patent: **24.10.2018**
(21) Application number: 13802859.2
(22) Date of filing: 29.10.2013
(51) Int. Cl.: C02F 3/12, E03F 11/00, C02F 3/22, C02F 3/30

(54) **INSIDE STRUCTURE FOR WASTE WATER TREATMENT REACTOR**
INNENSTRUKTUR FÜR ABWASSERBEHANDLUNGSREAKTOR
STRUCTURE INTÉRIEURE POUR RÉACTEUR DE TRAITEMENT D'EAUX USÉES

(30) Priority: 02.11.2012 CZ 20120752
(43) Date of publication of application: 09.09.2015
(73) Proprietor: ECO-CHEM Research Agency S.R.O., 10000 Praha (CZ)
(72) Inventor: MACKRLE, Svatopluk, 60200 Brno (CZ); DRACKA, Oldrich, 60200 Brno (CZ)
(74) Representative: Zemanová, Veronika
(86) International application number: PCT/CZ2013/000139
(87) International publication number: WO 2014/067502

(56) References cited:
- GB-A- 1 396 699
- US-A- 4 396 060
- US-B1- 7 178 677

## Description

### Field of the invention

The invention relates to an inside structure for waste water treatment reactor, particularly for activation treatment by means of suspended activated sludge.

### Background of the invention

Small waste water treatment reactors are usually delivered as complete assemblies to the site of operation where they are installed and connected to the waste water inlet and purified water outlet. In addition to the appropriate and reliable performance, low price and minimum operational demands are important factors for such reactors. With regard to the smallest reactors, both the appropriate and reliable performance and the minimum operational demands are ensured by the use of the low-load activation technology including nitrification and denitrification, while the desired low price is based on a simple constructional arrangement in combination with mass production and transportability. A technical solution, which enables the mass production and good transportability to be achieved, consists in assembling the reactor from a stackable tank and a built-in internal structure inserted into the former and providing for all the necessary functional compartments and other necessary functional elements, as described in the documents PV 2001-3871, PV 2002-3560 and PV 2009-45 (all of them by Mackrle S., Mackrle V., Dračka O.). The objective of the present invention is to provide a further simplification of the built-in internal reactor structure in order to facilitate the manufacture and assembly of the same and thereby further reduce its price and improve its storability and transportability. An inside structure for a waste water treatment is disclosed in US7178677.

### Summary of the invention

The above object is achieved with an inside structure of a reactor for waste water treatment, as defined in claim 1, particularly for activation treatment by means of suspended activated sludge, which comprises a pair of walls, said walls including:
- a separator concavity having the form of a shell of an inverted truncated quarter cone or half cone, preferably in combination with a quarter cylindrical or half cylindrical upper rim and being intended for delimiting an upwardly extending space of a separator,
- planar portions of the wall for bring the same into abutment with a base wall of a reactor tank or with another wall.

The inside structure of a reactor of the invention comprises a pair of walls which are apposed mutually, either wall including the separator concavity in the form of a shell of an inverted truncated half cone, the separator concavities being arranged opposite each other and delimiting the interior space of the separator in the form of an inverted truncated cone.

Each of the mutually adjoining walls includes a first recirculation concavity adjoining the bottom portion of the separator concavity and being adjoined by an outlet concavity, wherein the first recirculation concavities jointly delimit a first recirculation air-lift pump and the outlet concavities jointly delimit an outlet of the recirculation air-lift pump, said outlet being terminated by an outlet opening formed at the end of the outlet concavity.

According to another embodiment each of the mutually adjoining walls further includes an inlet concavity and an introduction concavity connected to the lower end of the former, the inlet concavities of the walls jointly delimiting the casing of a strainer basket and the introduction concavities of the walls jointly delimiting an introduction pipework, while the end of one of the introduction concavities is connected to an introduction socket.

It is also advantageous when the separator concavity includes an internal concavity which is adapted to be covered by a shaped strip while leaving its upper opening open and which extends from the top portion of the separator concavity to the bottom portion of the same, and each of the mutually adjoining walls includes a second recirculation concavity, the second recirculation concavities of the walls jointly delimiting a second recirculation air-lift pump, one end of the latter being connected to the internal concavity and the other end of the same leading below the casing of the strainer basket.

Each of the mutually adjoining walls may include a overflow orifice in its upper portion, the overflow orifices of the walls being mutually aligned to form a common overflow orifice jointly, and a pair of equalizing orifices in its bottom portion, said orifices being adapted to be mutually aligned and to enable an insertion of unidirectional non-return flap valves.

Preferably, at least one of the mutually adjoining walls further includes a first air-supply concavity for feeding air into the first air-lift pump and least one of the mutually adjoining walls further includes a second air-supply concavity for feeding air into the second air-lift pump.

The separator concavity may be provided with an outlet socket for connecting an outlet pipe.

According to another embodiment of the invention, the inside structure comprises the wall including the separator concavity formed by a shell of an inverted truncated half cone, the bottom portion of the separator concavity incorporating a sludge socket arranged at the external side thereof, and an insert having the form of a shell of an inverted truncated half cone with planar side walls for attaching to the wall and/or to the base wall of the reactor tank, the insert or the wall further comprising a curved bottom rim for forming a pocket in the separator, the pocket having closed bottom and lateral ends and an open top end.

A further simplification of the manufacture and assembly of water treatment reactors is provided by the constructional arrangement of the inside structure according to the invention, wherein the reactor comprises an upwardly extending separator for separating sludge from water being treated, said separator being formed by at least two mutually adjoining walls, at least one of said walls comprising an upwardly extending separator concavity, said concavity forming at least one portion of the interior space of said separator when said walls are brought into mutual abutment. In a preferred embodiment, said separator concavity is substantially formed by the shell of an inverted truncated quarter cone or half cone or, as the case may be, by a combination of the shell of an inverted truncated quarter-cone or half-cone and the shell of a quarter cylinder or half cylinder. In another preferred embodiment, at least one of said walls comprises additional concavities, the latter forming additional functional elements of the reactor when said walls are brought into mutual abutment. One of the optional constructional arrangements of the reactor according to the invention consists in that said separator is formed by bringing two walls into mutual abutment, either wall comprising a plurality of concavities which form the interior space of said reactor and, if need be, additional functional elements of the same when said abutment is accomplished, and in that said walls simultaneously enable the nitrification and denitrification compartments to be mutually separated when the inside structure is inserted into a reactor tank. Another alternative arrangement of the reactor structure according to the invention consists in that the wall, which is being adjoined by the other wall comprising a concavity or a plurality of concavities, is directly formed by one of the walls of the reactor tank.

According to yet another preferred embodiment, the individual elements of the inside structure (particularly the walls with concavities) are formed by plastic mouldings. After the inside structure has been dismantled, its individual parts are easy to stack and thus do not have excessive space demands when being stored or transported.

### Brief description of the drawings

Hereinafter, the examples of the preferred embodiments of the present invention are described with reference to the following schematical figures:
Fig. 1A and 1B showing the first preferred embodiment of the inside structure in a front view, the structure being formed by a pair of mouldings which, themselves, form the inside structure according to the invention after having been brought into mutual abutment,
Fig. 2 showing the reactor tank along with the inside structure according to Figs. 1A and 1B in an axonometric view,
Fig. 3A showing the second preferred embodiment of the inside structure in an axonometric view,
Fig. 3B showing a wall of the inside structure according to Fig. 3A in an axonometric view,
Fig. 3C showing an insert of the inside structure according to Fig. 3A in an axonometric view,
Fig. 4 showing the reactor tank along with the inside structure according to Figs. 3A in a plan view, and
Fig. 5 showing the ground plan of the third preferred embodiment of the inside structure according to the invention.

### Examples of preferred embodiments of the invention

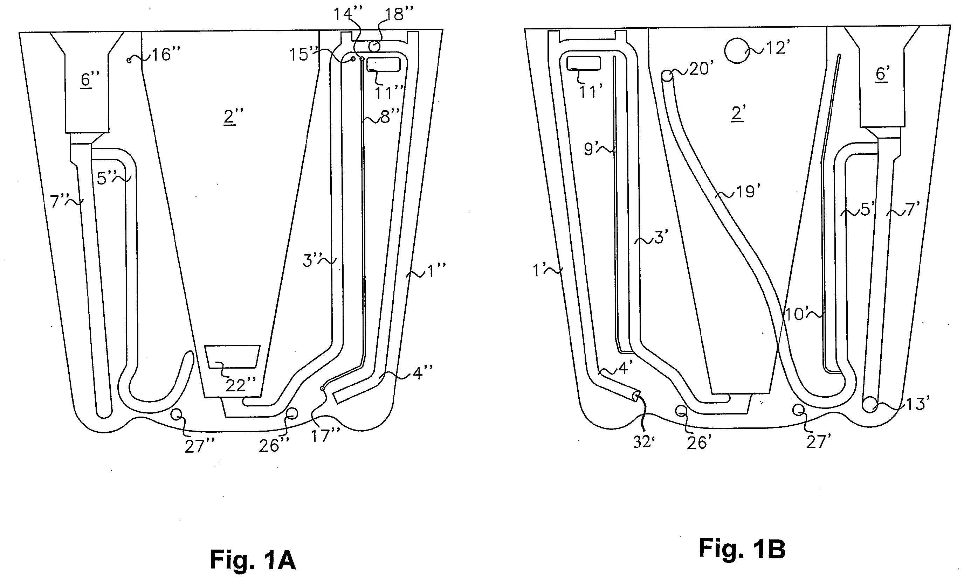

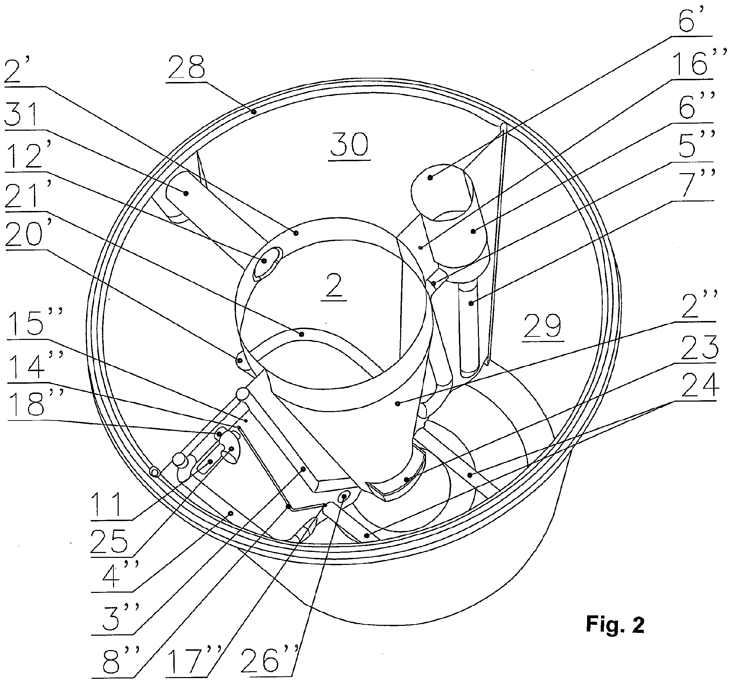

The first preferred embodiment of the inside structure of a reactor according to the invention is shown in Fig. 1 in the disassembled state. Fig. 1A shows the first wall 1' and Fig. 1B shows the second wall 1", wherein putting said walls in mutual abutment there is formed the inside structure of a reactor including the upwardly extending separator 2 and other functional elements of the reactor, as depicted in Fig. 2. The first and second walls 1', 1" are largely mirror symmetrical, each of them including the respective upwardly extending separator concavity 2', 2" substantially assuming the form of the shell of an inverted truncated half cone combined with a half cylinder. Furthermore, the first and second walls 1', 1" include a plurality of additional concavities substantially assuming semi-tubular shapes: the first recirculation concavities 3' and 3", the outlet concavities 4' and 4", the second recirculation concavities 5' and 5", the inlet concavities 6' and 6", the introduction concavities 7', 7", the aeration concavity 8", the first air-supply concavity 9' and the second air-supply concavity 10', the lower end of the first air-supply concavity 9' being connected to the bottom portion of the first recirculation concavity 3' and the lower end of the second air-supply concavity 10' being connected to the bottom portion of the first recirculation concavity 5'. The first and second walls 1', 1" further include the respective overflow orifices 11', 11", which become mutually aligned and jointly form the common overflow orifice 11. The upper portion of the separator concavity 2' accommodates the outlet socket 12'. The lower end of the introduction concavity 7' incorporates the introduction socket 13'. The upper end of the aeration concavity 8" is provided with the inlet aeration socket 14", while the lower end of the same is provided with the outlet aeration socket 17". The top portion of the second wall 1" incorporates the first connecting socket 15" and the second connecting socket 16", the former being aligned with the upper end of the first air-supply concavity 9' and the latter being aligned with the upper end of the second air-supply concavity 10' after the first and second walls 1', 1" have been brought into mutual abutment. The top portion of the first recirculation concavity 3" accommodates the auxiliary socket 18" for attaching the pivotable regulating elbow 25. The separator concavity 2' further incorporates the additional internal concavity 19' which extends at an angle relative to the longitudinal direction of the separator concavity 2' and is terminated by the upper opening 20'.

If the internal concavity 19' is overlaid by a shaped strip 21' and the first and second walls 1', 1" are brought into mutual abutment and joint together, the separator concavities 2' and 2" will form the upwardly extending separator 2, the inlet concavities 6' and 6" will form a casing for a strainer basket (not shown) and the introduction concavities 7', 7" will form an introduction pipework leading from the casing of the strainer basket into the bottom portion of the inside structure where the pipework is terminated by the introduction socket 13'. Furthermore, the first recirculation concavities 3', 3" will form the first recirculation air-lift pump which leads from the base of the separator 2 towards the top portion of the inside structure where it turns downwards again. The lower end of the latter is connected to the outlet pipework formed by the outlet concavities 4', 4" of the recirculating air-lift pump, the outlet pipework being terminated by the outlet opening 32'. The second recirculation concavities 5', 5" will jointly form the second recirculating air-lift pump which is connected to internal concavity 19'. The latter is overlaid, along with its free upper opening 20', by the shaped strip 21' and leads into the space under the casing of the strainer basket, the casing being formed by the inlet concavities 6', 6". After having been brought into abutment with the first wall 1', the aeration concavity 8" forms the aeration feed. Simultaneously, the first air-supply concavity 9' and the second wall 1" will jointly form the air feed for the first recirculating air-lift pump, while the air-supply concavity 10' and the second wall 1" will jointly form the air feed for the second recirculating air-lift pump. Furthermore, the mutual abutment of the first and second walls 1', 1" will cause the first connecting socket 15" to adjoin the upper end of the first air-supply concavity 9' and the second connecting socket 16" to adjoin the upper end of the first air-supply concavity 10'.

In general, the mutual abutment of the first and second walls 1', 1" will enable various functional elements to form, as shown in Fig. 2. The separator concavity 2" is provided with the transfer orifice 22" in its bottom portion, said orifice being adjoined with the deflecting adapter 23 having an open upper end. The inlet aeration socket 14", the first connecting socket 15" and the second connecting socket 16" are connected to the respective air-supply hoses (not shown). The outlet aeration socket 17" is adjoined with the aeration element 24 fixed thereto. The auxiliary socket 18" is connected to the pivotable elbow 25. The bottom portions of the first wall 1' and second wall 1" incorporate the respective pairs of the mutually aligned first equalizing orifices 26', 26" and mutually aligned second equalizing orifices 27', 27" enabling unidirectional non-return flap valves to be inserted (not shown) for the purpose of compensating the pressure differences between the nitrification compartment 29 and the denitrification compartment 30.

Fig. 2 shows the inside structure according to the invention, said inside structure being inserted into the reactor tank 28 and separating the nitrification compartment 29 from the denitrification compartment 30. Nevertheless, the nitrification and denitrification compartments remain interconnected through the common overflow orifice 11 formed by the mutually aligned overflow orifices 11' and 11". Afterwards, the assembly of the reactor is completed by attaching the outlet pipe 31 to the outlet socket 12', said pipe passing through the side wall of the tank 28, and by inserting a strainer basket (not shown) into the corresponding casing. An inlet pipe (also not shown) leads into the casing of the strainer basket.

The reactor described above works in the following manner: The waste water to be treated flows into the strainer basket accommodated in its casing. In the strainer basket, coarse impurities, such as toilet paper, are entrapped and the liquid is then led through the introduction pipework and the introduction socket 13' towards the base of the denitrification compartment 30 where it is mixed with the recirculating activated sludge, the latter being fed along with nitrates into the bottom portion of the denitrification compartment 30 through the outlet opening 32' of the first recirculation air-lift pump. The directions of the introducition socket 13' and the outlet opening 32' are selected in a manner which enables a through stirring process to occur in the bottom portion of the denitrification compartment 30 whereby the activated sludge is prevented from sedimenting. The presence of the activated sludge and of the organic substrate contained in the waste water to be treated enables the denitrification process of present nitrates to take place. The nitrogen gas, which is the product of the nitrates reduction, escapes into the ambient atmosphere. Afterwards, the activation mixture flows through the common overflow orifice 11 from the denitrification compartment 30 to the nitrification compartment 29 which is aerated by means of the aeration element 24. The aeration element 24 is fed with compressed air through the aeration concavity 8". The aeration process enables the activated sludge to form a suspension. This process also ensures the supply of oxygen which is essential for the oxidation of nitrogen compounds (particularly of the ammonia released from urea) and the organic substances whereby the purification of the treated waste water is accomplished. Subsequently, the purified water along with the activated sludge containing the nitrates formed in the course of the above described process flow through the deflecting adapter 23 and the transfer orifice 22' into the separator 2' where the separation of the activated sludge from the purified water takes place. Then, the purified water flows through the outlet socket 12' and the outlet pipe 31 out of the reactor while the separated activated sludge together with the nitrates is pumped out from the bottom portion of the separator 2 by means of the first recirculation air-lift pump. The flow exiting the first recirculation concavity 3 is divided into two parts, the first one flowing through the outlet pipework of the first recirculation air-lift pump and through outlet opening 32' into the denitrification compartment 30, as described above, and the second one flowing through the pivotable elbow 25 into the nitrification compartment 29, wherein the pivoting movement of the pivotable elbow 25 enables the proportion between said two partial lows to be controlled. The first and second recirculation air-lift pumps are driven by the compressed air supplied by means of the first and second air-supply concavities 9', 10'. The air exiting the first recirculation air-lift pump is led through the pivotable elbow 25. The second recirculation air-lift pump draws the activation mixture denitrification compartment 30 through the upper opening 20' and the internal concavity 19', namely from a point situated in the vicinity of the common overflow orifice 11 where oxygen and nitrates are removed from the activation mixture and the latter is blown, along with the supplied air, into the space under the casing of the strainer basket. The air exiting the second recirculation air-lift pump bubbles through the strainer basket where it is gradually degrading and simultaneously supporting the decomposition of the entrapped impurities, while the activation mixture is flowing through the introduction socket 13' back to the denitrification compartment 30, thus supporting the stirring process which the mixture is undergoing in the denitrification compartment 30.

Obviously, the walls 1', 1" do not necessarily need to include all the concavities described above. Instead, some concavities may be replaced with a separate pipework or, as the case may be, with other elements which can be separately inserted.

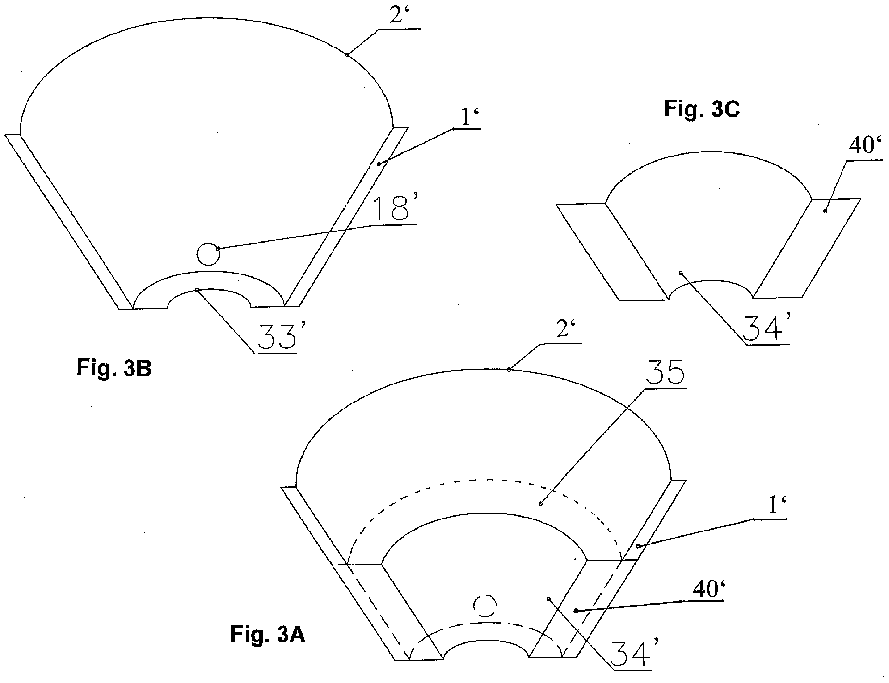

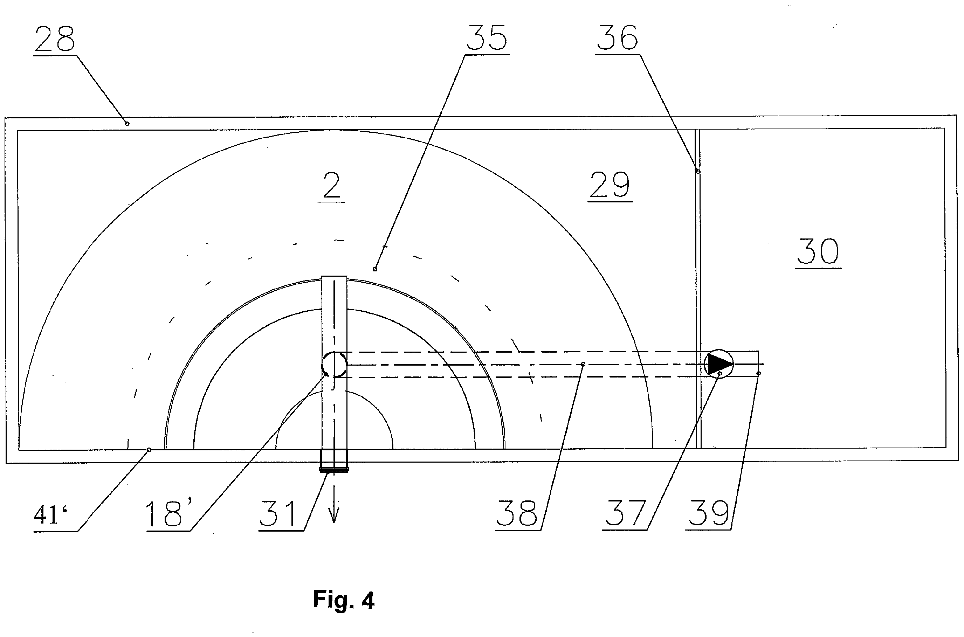

An inside structure according to a second preferred embodiment of the invention is schematically depicted in Fig. 3A, the individual components of the same being shown in Figs. 3B and 3C. The wall 1' incorporates the separator concavity 2' which is substantially formed by the shell of an inverted truncated half cone having a curved bottom rim 33' and a sludge socket 42' arranged on the external side of the bottom portion of said concavity. The bottom portion of the separator concavity 2' incorporates the insert 34' having the form of a shell of an inverted truncated half cone (the half cone being, however, slightly smaller than that of the separator concavity 2' itself) in combination with the straight side walls 40'. The lower edge of the insert 34' is joined with the inner edge of the curved bottom rim 33' and the side walls 40' are joined with the wall 1' whereby a pocket 35 is formed having closed bottom and lateral ends and open top end. The sludge socket 42' extends from the bottom portion of the pocket 35 (the upper inlet of the pocket, which is left open, is indicated by means of dashed lines in the figures). Fig. 4 shows the second preferred embodiment of the inside structure according to the invention after the same has been inserted into the reactor tank 28. In this case, the reactor tank has a rectangular ground plan. When the wall 1' is brought into abutment with one of the straight base walls 41 of the rectangular reactor tank 28, the separator concavity 2' is transformed into the separator 2. The reactor tank 28 further incorporates the partition wall 36 which divides the tank compartment into the nitrification compartment 29 and denitrification compartment 30. The pumping pipeline 38, which is connected to the sludge socket 42', leads towards the recirculation pump 37. The outlet 39 of the recirculation pump leads into the denitrification compartment 30. The outlet pipe 31, which extends from the top portion of the separator 2, passes through the base wall 41 of the reactor tank 28. The reactor further comprises an aeration system (not shown) which is arranged inside the nitrification compartment 29 and is connected to a compressed air supply (also not shown). Moreover, an inlet pipe for purified water (not shown) leads into the denitrification compartment 30, the latter further containing suitable stirring means (also not shown).

The reactor according the second preferred embodiment works similarly to the reactor incorporating the inside structure according to the first preferred embodiment described hereinbefore, while the separator 2 works in accordance with the method described in the CZ pat. no. 295871 (PCT/CZ02/00027, EP 1390306).

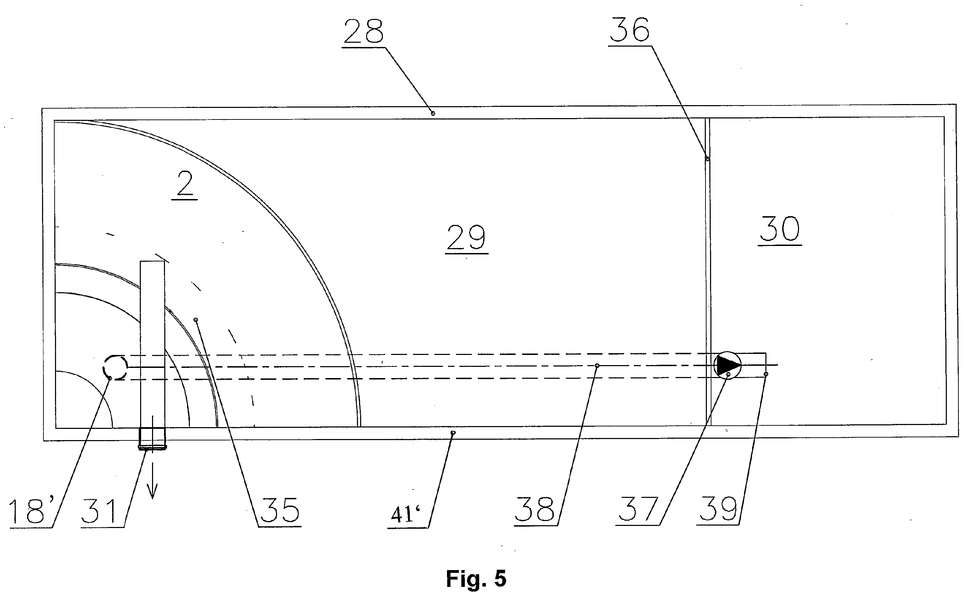

The above described examples of preferred embodiments do not exhaust all feasible alternatives of the inside structure for waste water treatment according to the present invention. Fig. 5 shows the reactor tank 28 accommodating an inside structure according to the third preferred embodiment of the present invention. Again, the reactor tank 28 has a rectangular ground plan and the wall 1' incorporates the separator concavity 2' having the form of the shell of an inverted truncated quarter cone arranged in one of the corners of the reactor tank 28 which means that the separator 2 is delimited both by the pair of mutually perpendicular base walls 41 and by the separator concavity 2'. The remaining elements, which are shown in Fig. 5, are identical to those shown in Fig. 4. Because of the schematical nature of the figure, the straight edge portions of the wall 1' are not shown therein.

The wall **1'** may be fastened in the reactor tank **28** and / or a pair of the walls **1', 1"** may be joined together using usual methods of fastening, such as adhesive bonding, joining by means of nut bolts or various kinds of clamps, welding or a combination of said methods, in same cases combined with providing the parts to be joined with complementary shapes.

### Industrial applicability

The inside structure according to the present invention may be particularly useful in small and medium-sized waste water treatment plants which utilize the treatment process based on the separation of flocculating suspension.

**List of reference signs**

| | |
|---|---|
| 1' and 1" - walls | 7', 7" - introduction concavities |
| 2', 2" - separator concavities | 8" - aeration concavity |
| 2 - separator | 9' - first air-supply concavity |
| 3', 3" - first recirculation concavities | 10' - second air-supply concavity |
| 4', 4" - outlet concavities | 11', 11" - overflow orifices |
| 5', 5" - second recirculation concavities | 11 - common overflow orifice |
| 6', 6" - inlet concavities | 12' - outlet socket |
| 13' - introduction socket | 29 - nitrification compartment |
| 14' - inlet aeration socket | 30 - denitrification compartment |
| 15' - first connecting socket | 31 - outlet pipe |
| 16' - second connecting socket | 32' - outlet opening |
| 17' - outlet aeration socket | 33' - bottom rim |
| 18', 18" - auxiliary sockets | 34' - insert |
| 19' - internal concavity | 35 - pocket |
| 20' - upper opening | 36 - partition wall |
| 21' - shaped strip | 37 - recirculation pump |
| 22" - transfer orifice | 38 - pumping pipeline |
| 23 - deflecting adapter | 39 - outlet of the recirculation pump 37 |
| 24 - aeration element | 40' - side wall |
| 25 - pivotable elbows | 41 - base wall of the reactor tank 28 |
| 26', 26", 27', 27" - equalizing orifices | 42 - sludge socket |
| 28 - reactor tank | |

## Claims

1. Inside structure of a reactor for waste water treatment, particularly for activation treatment by means of suspended activated sludge,
**characterized in that,** it comprises a pair of walls (1', 1"), said walls (1', 1") including:
- a separator concavity (2', 2") having the form of a shell of an inverted truncated half cone, preferably in combination with a half cylindrical upper rim and being intended for delimiting an upwardly extending space of a separator (2), the separator concavities (2', 2") being adapted such that when the walls are arranged opposite each other, the separator concavities (2', 2") delimit the interior space of the separator (2) assuming the form of an inverted truncated cone,
- planar portions of the wall (1', 1") for bringing the same into abutment with a base wall (41) of a reactor tank (28) or with the other wall (1', 1"),
while each of the walls (1', 1") further includes a first recirculation concavity (3', 3") adjoining the bottom portion of the separator concavity (2', 2") and being adjoined by an outlet concavity (4', 4"), wherein the first recirculation concavities (3', 3") are adapted for jointly delimiting a first recirculation air-lift pump and the outlet concavities (4', 4") are adapted for jointly delimiting an outlet of the recirculation air-lift pump, said outlet being terminated by an outlet opening (32') formed at the end of the outlet concavity (4').

2. Inside structure according to claim 1, **characterized in that** each of the walls (1', 1") which may be apposed mutually further includes:
- an inlet concavity (6', 6") and an introduction concavity (7', 7") connected to the lower end of the former, the inlet concavities (6', 6") of the walls jointly delimiting the casing of a strainer basket and the introduction concavities (7', 7") of the walls jointly delimiting an introduction pipework, while the end of one of the introduction concavities (7') is connected to an introduction socket (13').

3. Inside structure according to claim 2, **characterized in that**
- the separator concavity (2', 2") includes an internal concavity (19') which is adapted to be covered by a shaped strip (21') while leaving its upper opening (20) open and which extends from the top portion of the separator concavity (2') to the bottom portion of the same, and
- each of the walls (1', 1") which may be apposed mutually includes a second recirculation concavity (5', 5"), the second recirculation concavities (5', 5") of the walls jointly delimiting a second recirculation air-lift pump, one end of the latter being connected to the internal concavity (19') and the other end of the same leading below the casing of the strainer basket.

4. Inside structure according to any of the claims 1 to 3, **characterized in that** each of the walls (1', 1") which may be apposed mutually includes:
- a overflow orifice (11', 11") in its upper portion, the overflow orifices (11', 11") of the walls being adapted to be mutually aligned to form a common overflow orifice (11) jointly,
- a pair of equalizing orifices (26', 27'; 26", 27") in its bottom portion, said orifices being adapted to be mutually aligned and to enable an insertion of unidirectional non-return flap valves.

5. Inside structure according to claims 1 and 3, **characterized in that** at least one of the walls (1', 1") which may be apposed mutually further includes a first air-supply concavity (9') for feeding air into the first air-lift pump and least one of the walls which may be apposed mutually further includes a second air-supply concavity (10') for feeding air into the second air-lift pump.

6. Inside structure according to any of the claims 1 to 5, **characterized in that** the separator concavity (2') is provided with an outlet socket (12') for connecting an outlet pipe (31).

7. Inside structure according to claim 1, **characterized in that** it comprises
- the wall (1') including the separator concavity (2') formed by a shell of an inverted truncated half cone, the bottom portion of the separator concavity (2') incorporating a sludge socket (42') arranged at the external side thereof, and
- an insert (34') having the form of a shell of an inverted truncated half cone with planar side walls (40') for attaching to the wall (1') and/or to the base wall (41) of the reactor tank (28),
the insert (34') or the wall (1') further comprising a curved bottom rim (33') for forming a pocket (35) in the separator (2), the pocket (35) having closed bottom and lateral ends and an open top end.

## Patentansprüche

1. Reaktoreinbau für eine Wasserkläranlage, insbesondere zur Wasserklärung in einem Schlammbelebungsverfahren unter Verwendung eines suspendierten Schlamms, **dadurch gekennzeichnet, dass** der Einbau ein Paar von Wänden (1', 1") umfasst, wobei diese Wände enthalten:
- mindestens eine die Abscheideraushöhlung (2', 2") in der Form der Mantelfläche eines umgekehrten Halbkegelstumpfs, gegebenenfalls in einer Kombination mit einem halbzylindrischen oberen Rand, zur Abgrenzung des sich nach oben erweiternden Raums eines Abscheiders (2), wobei die Abscheideraushöhlungen (2', 2") derart angepasst sind, dass bei der gegenseitig anliegenden Stellung der Wände durch die Abscheideraushöhlungen (2', 2") der innere Raum des Abscheiders (2) abgegrenzt wird, welcher Raum die Form eines umgekehrten Kegelstumpfs aufweist,
- ebenflächige Abschnitte der Wand (1', 1") zum Abstützen an der Grundwand (41) des Reaktorgefäßes (28) oder an der anderen Wand (1', 1"),
- wobei jede der Wände (1', 1") ferner enthält:
eine erste die Umwälzung ermöglichende Aushöhlung (3', 3"), die an den unteren Teil der jeweiligen Abscheideraushöhlung (2', 2") anschließt, sowie eine an die erstgenannte Aushöhlung anschließende Auslaufaushöhlung (4', 4"), wobei die ersten die Umwälzung ermöglichenden Aushöhlungen (3', 3") derart angepasst sind, dass sie gemeinsam die erste Mammutpumpe zur Umwälzung von Wasser abgrenzen, und die Auslaufaushöhlungen (4', 4") derart angepasst sind, dass sie gemeinsam den Auslauf der Mammutpumpe zur Umwälzung von Wasser abgrenzen, welcher Auslauf von der an dem Ende der Auslaufaushöhlung (4') angeordneten Auslauföffnung (32') beendet ist.

2. Reaktoreinbau nach Anspruch 1, **dadurch gekennzeichnet, dass** jede der in die gegenseitige Anlage bringbaren Wände (1', 1") ferner enthält:
- mindestens eine Einlaufaushöhlung (6', 6") sowie eine an den unteren Teil der erstgenannten Aushöhlung anschließende Einführungsaushöhlung (7', 7"), wobei die Einlaufaushöhlungen (6', 6") zur gemeinsamen Abgrenzung des Gehäuses eines Einlaufkorbs und die Einführungsaushöhlungen (7', 7") zur gemeinsamen Abgrenzung einer Einlaufrohrleitung angepasst sind, wobei an das Ende einer der Einführungsaushöhlungen (7') ein Einlaufstutzen (13) anschließt.

3. Reaktoreinbau nach Anspruch 2, **dadurch gekennzeichnet, dass**
- die Abscheideraushöhlung (2', 2") eine innere Aushöhlung (19') umfasst, die von einem entsprechend ausgeformten Streifen (21') so verdeckbar ist, dass eine obere Öffnung (20) frei bleibt, und die sich in der Richtung von dem oberen Teil der Abscheideraushöhlung (2') zu dem unteren Teil derselben erstreckt, und
- jede der in die gegenseitige Anlage bringbaren Wände (1', 1") mindestens eine zweite die Umwälzung ermöglichende Aushöhlung (5', 5") enthält, wobei die zweiten die Umwälzung ermöglichenden Aushöhlungen (5', 5") gemeinsam die zweite Mammutpumpe zur Umwälzung von Wasser abgrenzen, die an ihrem einen Ende mit der inneren Aushöhlung (19') verbunden ist und mit ihrem anderen Ende unterhalb des Gehäuses des Einlaufkorbs ausmündet.

4. Reaktoreinbau nach einem der Ansprüche 1 bis 3, **dadurch gekennzeichnet, dass** jede der in die gegenseitige Anlage bringbaren Wände (1', 1") ferner enthält:
- mindestens eine in dem oberen Teil des Einbaus angeordnete Überlauföffnung (11', 1 1"), wobei die Überlauföffnungen (11', 11") in eine gegenseitig fluchtende Stellung bringbar sind, um eine gemeinsame Überlauföffnung (11) auszubilden,
- mindestens ein in dem unteren Teil des Einbaus angeordnetes Paar von Ausgleichöffnungen (26', 27'; 26", 27"), die in eine gegenseitig fluchtende Stellung bringbar und zum Einsetzen von einseitig wirkenden Rückschlagklappen bestimmt sind.

5. Reaktoreinbau nach Ansprüchen 1 und 3, **dadurch gekennzeichnet, dass** mindestens eine der in die gegenseitige Anlage bringbaren Wände (1', 1") ferner eine erste die Belüftung bewirkende Aushöhlung (9') zur Zuführung von Luft in die erste Mammutpumpe zur Umwälzung von Wasser umfasst und mindesten eine der der in die gegenseitige Anlage bringbaren Wände (1', 1") ferner eine zweite die Belüftung bewirkende Aushöhlung (10') zur Zuführung von Luft in die zweite Mammutpumpe zur Umwälzung von Wasser umfasst.

6. Reaktoreinbau nach einem der Ansprüche 1 bis 5, **dadurch gekennzeichnet, dass** die Abscheideraushöhlung (2') mit einem Auslaufstutzen (12') zum Anschließen eines Auslaufrohrs (31) versehen ist.

7. Reaktoreinbau nach Anspruch 1, **dadurch gekennzeichnet, dass** er ferner umfasst:
- eine Wand (1') mit einer Abscheideraushöhlung (2') in der Form der Mantelfläche eines umgekehrten Halbkegelstumpfs, wobei in dem unteren Teil der Abscheideraushöhlung (2') ein außenseitiger Schlammstutzen (42') angeordnet ist, und
- einen Einsatz (34') in der Form der Mantelfläche eines umgekehrten Halbkegelstumpfs mit ebenflächigen Seitenwänden (40') zur Befestigung an der Wand (1') und/oder an der an der Grundwand (41) des Reaktorgefäßes (28),
wobei der Einsatz (34') oder die Wand (1') ferner einen gebogenen unteren Rand (33') zur Ausbildung einer unten und seitlich geschlossenen und oben offenen Tasche (35) innerhalb des Abscheiders (2) enthält.

## Revendications

1. Installation intérieure d'un réacteur pour le traitement de l'eaux usées, en particulier pour le traitement par activation avec la boue activée en suspension,
**caractérisé en ce qu'elle** comprend une paire de parois (1', 1"), lesdites parois comprenant :
- une concavité (2', 2") de séparation en forme d'une enveloppe semi-cône tronqué inversé, de préférence en combinaison avec un bord supérieur semi-cylindrique, pour définir un espace s'élargissant vers le haut du séparateur (2), où les concavités (2', 2") de séparation sont adaptées de sorte que si les parois soient disposées l'un contre l'autre, les concavités (2', 2") de séparation définissent un espace interne du séparateur (2) sous la forme d'un cône tronqué inversé,
- des sections de paroi (1', 1") planes pour confiner à la paroi (41) de base du réservoir (28) du réacteur ou à la seconde paroi (1', 1 "),
- pendent que chacune des parois (1', 1") contient en outre une première concavité (3', 3") de recirculation attenante à la partie inférieure de la concavité (2', 2") de séparation et étant attenue par une concavité (4', 4") d'écoulement, pendant que les premières concavités (3', 3") de recirculation sont adaptées pour définir conjointement la première pompe mammouth de recirculation et les concavités (4', 4") d'écoulement sont adaptées pour définir conjointement la sortie de la pompe mammouth de recirculation, la sortie étant terminée par une ouverture (32 ') de la sortie formée à l'extrémité de la concavité (4') d'écoulement.

2. L'installation intérieure d'un réacteur selon la revendication 1, **caractérisé en ce que** chacune des parois (1', 1") pouvant être mutuellement apposées comprend en outre :
- une concavité (6', 6") d'amenée et une concavité (7', 7 ") d'introduction qui suit la partie inférieure de la concavité (6', 6") d'amenée, les concavités (6 ', 6") d'amenée des parois définissant conjointement la boîtier du panier d'amenée et les concavités (7', 7") d'introduction des parois définissant conjointement une conduite d'introduction, tandis que l'extrémité d'une des concavités (7') d'introduction est relié à un manchon (13') d'introduction.

3. L'nstallation intérieure d'un réacteur selon la revendication 2, **caractérisé en ce que**
- la concavité (2', 2") de séparation comprend une concavité (19') interne adaptée pour être recouverte par une bande (21') profilée, pendant que son ouverture (20) supérieure reste ouverte et qui s'étend du haut de la concavité (2 ') de séparation à la partie inférieure de celle-ci ; et
- chacune des parois (1', 1") qui peuvent être mutuellement apposées comprend des secondes concavités (5', 5 ") de recirculation des parois, qui définissent conjointement une seconde pompe mammouth de recirculation, une extrémité de celle-ci étant reliée à la concavité (19 ') interne et l'autre extrémité de celle-ci aboutant sous la boîtier du panier d'amenée.

4. L'nstallation intérieure selon l'une quelconque des revendications 1 à 3, **caractérisé en ce que** chacune des parois (1', 1") qui peuvent être mutuellement apposées comprend:
- un orifice (11', 11") de débordement dans sa partie supérieure, lesdits orifices (11', 11") de débordement étant mutuellement ajustés pour former ensemble un orifice (11) de débordement commun,
- dans sa partie inférieure, une paire des orifices (26', 27' ; 26", 27") égalisants, lesdits orifices étant adaptés pour être ajustés l'un à l'autre et pour permettre une insertion des clapets unidirectionnels de non-retour.

5. L'nstallation intérieure selon la revendication 1 à 3, **caractérisé en ce qu'au** moins une paroi des parois (1', 1") qui peuvent être mutuellement apposées comprend en outre une concavité (9') d'aération pour fournir de l'air à la première pompe mammouth de recirculation et au moins une des parois (1', 1") qui peuvent être mutuellement apposées comprend en outre une seconde concavité (10') d'aération pour fournir de l'air à la second pompe mammouth de recirculation.

6. L'nstallation intérieure d'un réacteur selon l'une quelconque revendication 1 à 5, **caractérisé en ce que** la concavité (2') de séparation est munie avec un manchon (12') de sortie pour raccorder un tuyau (31) de décharge.

7. L'nstallation intérieure d'un réacteur selon la revendication 1, **caractérisé en ce qu'**elle comprend
- une paroi (1') avec la concavité (2') de séparation en forme d'un demi-cône tronqué inversé, la partie inférieure de la concavité (2') de séparation munie avec un manchon (42') de la boue disposé à l'extérieur de celle-ci, et
- un insertion (34') en forme d'une enveloppe du demi-cône tronqué inversé avec les parois (40') latérales plates pour la fixation à la paroi (1') et / ou à la paroi (41) de base du réservoir (28) du réacteur,
l'insertion (34') ou la paroi (1') comprenant en outre un bord (33') inférieur courbé pour former une poche (35) dans le séparateur (2), la poche (35) ayant un fond fermé et les côtés fermés et la butte ouverte.
